# EUROPEAN PATENT APPLICATION

(11) **EP 4 606 685 A1**
(43) Date of publication of application: **27.08.2025**
(21) Application number: 24210356.2
(22) Date of filing: 01.11.2024
(51) Int. Cl.: B62H 1/00

(54) **KICK STAND DEVICE**

(30) Priority: 21.02.2024 US 202418583299
(71) Applicant: Mobility Holdings, Limited, Causeway Bay (HK)
(72) Inventor: UIMONEN, Joakim, Hong Kong (HK); PÄIVIÖ, Pasi Robert, Hong Kong (HK); LIN, Eric Yi Hung, Hong Kong (HK); GOUDRAND, Antoine, Hong Kong (HK)
(74) Representative: Viering, Jentschura & Partner mbB Patent- und Rechtsanwälte

(57) **Abstract**

kickstand device (10) comprising: a mount portion (42) for attachment to a wheeled implement (12); a pivotable member (44) pivotally connected to the mount portion (42), the pivotable member (44) being pivotable between a first position to engage ground (46) and retain the wheeled implement (12) in an upright orientation and a second position away from ground engagement; wherein the mount portion (42) comprises a first mount location (80A) for connection to the wheeled implement (12) and a second mount location (80B) for connection to the wheeled implement (12), with the first mount location (80A) being in a fore direction of the wheeled implement (12) and the second mount location (80B) being in an aft direction of the wheeled implement (12), and the pivotable member (44) being pivotally connected to the mount portion (42) such that a pivot axis (66) about which the pivotable member (44) pivots between the first position and the second position is in a plane (70) and the first mount location (80A) is to a first side of the plane (70) and the second mount location (80B) is to a second side of the plane (70).

## Description

### TECHNICAL FIELD

The present disclosure is directed towards a kickstand that may be used for a bicycle, electric bicycle, motorcycle, moped or similar.

### BACKGROUND

A kickstand is used to maintain a bicycle, electric bicycle, motorcycle, moped or similar in an upright orientation while the bicycle, motorcycle, moped or similar is stationary (e.g., parked).

The bicycle, electric bicycle, motorcycle, moped or similar imparts one or more forces to the kickstand due to at least the weight thereof. Additional forces may be imparted to the kickstand from other sources, such as operator actuation, etc.

### SUMMARY

This summary is provided to introduce a selection of concepts in a simplified form that are further described below in the detailed description. This summary is not intended to identify key factors or essential features of the claimed subject matter, nor is it intended to be used to limit the scope of the claimed subject matter.

In accordance with one or more aspects, the present disclosure provides a kickstand device that includes a mount portion for attachment to a wheeled implement and a pivotable member pivotally connected to the mount portion. The pivotable member is pivotable between a first position to engage ground and retain the wheeled implement in an upright orientation and a second position away from ground engagement. The mount portion includes a first mount location for connection to the wheeled implement and a second mount location for connection to the wheeled implement, with the first mount location being in a fore direction of the wheeled implement and the second mount location being in an aft direction of the wheeled implement, and the pivotable member being pivotally connected to the mount portion such that a pivot axis about which the pivotable member pivots between the first position and the second position is in a plane and the first mount location is to a first side of the plane and the second mount location is to a second side of the plane.

In accordance with one or more aspects, the present disclosure provides a kickstand device that includes a mount portion for attachment to a wheeled implement and a pivotable member pivotally connected to the mount portion. The pivotable member is pivotable about a pivot axis between a first position to engage ground and retain the wheeled implement in an upright orientation and a second position away from ground engagement. The pivotable member transfers a torque to the mount portion when pivoting about the pivot axis from the second position to the first position.

In accordance with one or more aspects, the present disclosure provides a wheeled implement that includes a frame, a plurality of wheels rotatably connected to the frame, and a kickstand device. The kickstand device includes a mount portion for attachment to the frame and a pivotable member pivotally connected to the mount portion. The pivotable member is pivotable between a first position to engage ground and retain the wheeled implement in an upright orientation and a second position away from ground engagement. The mount portion includes a first mount location for connection to the frame and a second mount location for connection to the frame, with the first mount location being in a fore direction of the wheeled implement and the second mount location being in an aft direction of the wheeled implement, and the pivotable member being pivotally connected to the mount portion such that a pivot axis about which the pivotable member pivots between the first position and the second position is in a plane and the first mount location is to a first side of the plane and the second mount location is to a second side of the plane.

The following description and annexed drawings set forth certain illustrative aspects and implementations. These are indicative of but a few of the various ways in which one or more aspects may be employed. Other aspects, advantages, and/or novel features of the disclosure will become apparent from the following detailed description when considered in conjunction with the annexed drawings.

### DESCRIPTION OF THE DRAWINGS

FIG. 1 is a schematized, torn-away perspective illustration of an example kickstand device mounted upon an example wheeled implement (e.g., a bicycle) in accordance with one or more aspects of the present disclosure, and with the kickstand in a first position.
FIG. 2 is a view similar to FIG. 1, but with some portions of the bicycle removed to show some additional portions of the kickstand.
FIG. 3 is a schematized, torn-away perspective illustration of the example kickstand device and example wheeled implement (e.g., bicycle) of FIG. 1 from a different view point and with the kickstand in a second position.
FIG. 4 is a view similar to FIG. 3, but with some portions of the bicycle removed to show some additional portions of the kickstand.
FIG. 5 is a schematized, perspective illustration of the example kickstand device of FIG. 1, and with the kickstand in the first position.
FIG. 6 is a plan view of the kickstand device shown in FIG. 5.
FIG. 7 is a side view of the kickstand device shown in FIG. 5.
FIG. 8 is a top view of the kickstand device shown in FIG. 5.

### DETAILED DESCRIPTION

The claimed subject matter is now described with reference to the drawings, wherein like reference numerals are used to refer to like elements throughout. In the following description, for purposes of explanation, numerous specific details are set forth in order to provide an understanding of the claimed subject matter. It is evident, however, that the claimed subject matter may be practiced without these specific details. In other instances, structures and devices are illustrated in schematic or block diagram form in order to facilitate describing the claimed subject matter. Relative size, orientation, etc. of parts, components, etc. may differ from that which is illustrated while not falling outside of the scope of the claimed subject matter.

It is to be appreciated that, in one or more non-limiting examples, the present disclosure provides a kickstand device that includes a mount portion for attachment to a wheeled implement and a pivotable member pivotally connected to the mount portion. The pivotable member is pivotable between a first position to engage ground and retain the wheeled implement in an upright orientation and a second position away from ground engagement. The mount portion includes a first mount location for connection to the wheeled implement and a second mount location for connection to the wheeled implement, with the first mount location being in a fore direction of the wheeled implement and the second mount location being in an aft direction of the wheeled implement, and the pivotable member being pivotally connected to the mount portion such that a pivot axis about which the pivotable member pivots between the first position and the second position is in a plane and the first mount location is to a first side of the plane and the second mount location is to a second side of the plane.

Also, it is to be appreciated that, in one or more non-limiting examples, the present disclosure provides a kickstand device that includes a mount portion for attachment to a wheeled implement and a pivotable member pivotally connected to the mount portion. The pivotable member is pivotable about a pivot axis between a first position to engage ground and retain the wheeled implement in an upright orientation and a second position away from ground engagement. The pivotable member transfers a torque to the mount portion when pivoting about the pivot axis from the second position to the first position.

Also, it is to be appreciated that, in one or more non-limiting examples, the present disclosure provides a wheeled implement that includes a frame, a plurality of wheels rotatably connected to the frame, and a kickstand device. The kickstand device includes a mount portion for attachment to the frame and a pivotable member pivotally connected to the mount portion. The pivotable member is pivotable between a first position to engage ground and retain the wheeled implement in an upright orientation and a second position away from ground engagement. The mount portion includes a first mount location for connection to the frame and a second mount location for connection to the frame, with the first mount location being in a fore direction of the wheeled implement and the second mount location being in an aft direction of the wheeled implement, and the pivotable member being pivotally connected to the mount portion such that a pivot axis about which the pivotable member pivots between the first position and the second position is in a plane and the first mount location is to a first side of the plane and the second mount location is to a second side of the plane.

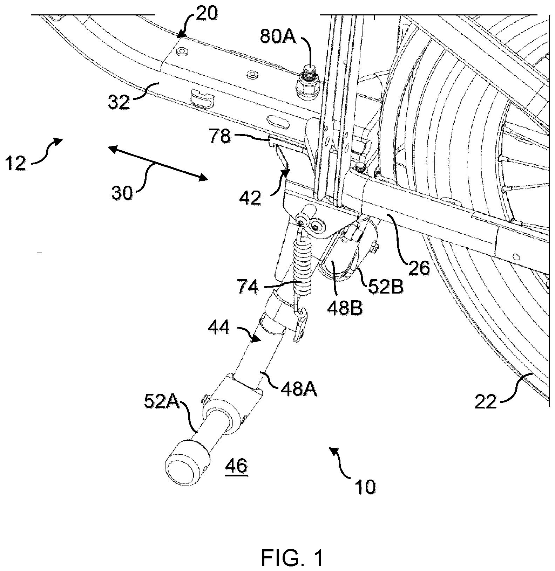

Referring to FIGS. 1-4, an example of a kickstand device 10 mounted upon an example wheeled implement 12 in accordance with one or more aspect of the present disclosure is shown. Within the shown example, the example wheeled implement is a bicycle. However, such is a non-limiting example and the wheeled implement may be something other than a bicycle, such as an electric bicycle, motorcycle, moped or similar. Thus, it is to be appreciated that a bicycle is just one example wheeled implement and that various different wheeled implements are possible, contemplated and within the scope of the present disclosure.

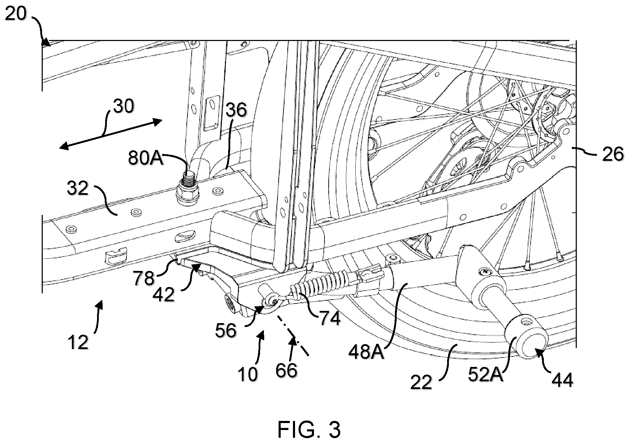

The wheeled implement 12 (e.g., bicycle) includes a frame 20 and plural ground-engaging wheels 22 (only one wheel is shown in FIGS. 1 and 3 due to the tear-away of those figures). Within the shown example, the wheeled implement 12 (e.g., bicycle) includes two ground-engaging wheels 22. It is to be appreciated that two ground-engaging wheels 22 is just one example and that various different numbers (e.g., three, four, etc.) of wheels are possible, contemplated and within the scope of the present disclosure.

The wheeled implement 12 (e.g., bicycle) includes various other structures. For example, the wheeled implement 12 (e.g., bicycle) may include structures (e.g., a seat or saddle) for one or more persons to ride in/upon the wheeled implement. The wheeled implement 12 (e.g., bicycle) may include structures (e.g., handlebars) for steering or directing the wheeled implement. The wheeled implement 12 (e.g., bicycle) may include structures for motivating the wheeled implement. Examples of such structures for motivating may include a manually operated arrangement (e.g., foot pedals and a drive link/chain) to drive at least one wheel, a motor arrangement (e.g., electric, fuel operated, etc.) and associated drive link/chain to drive at least one wheel, a braking arrangement, etc. The wheeled implement 12 (e.g., bicycle) may include structures to permit the wheeled implement to be folded (e.g., for transport, storage, etc.). The wheeled implement 12 (e.g., bicycle) may include many other structures. All various/other structures, and variations for constructions and configurations thereof, are possible, contemplated and within the scope of the present disclosure.

Focusing upon the frame 20, the frame may have a variety of constructions and configurations. Some or all of the frame 20 may be metal (e.g., steel), but other materials are possible, contemplated and within the scope of the present disclosure. In part, the frame 20 may vary dependent upon the type of wheeled implement (e.g., bicycle, motorcycle, moped, etc.), the number of wheels, etc. The variety of constructions and configurations are possible, contemplated and within the scope of the present disclosure.

Within the shown example, the shown wheel 22 is located within a yoke, or fork, portion 26 of the frame 20. Within an example, such yoke portion 26 may be considered to include a chainstay portion of the wheeled implement 12 (e.g., bicycle). It is to be appreciated that each wheel 22 is mounted (e.g., upon the frame 20) for rotation relative to the frame. Also, it is to be appreciated that each wheel 22 is mounted (e.g., upon the frame 20) so as to allow a possible engagement with the ground. Also, it is to be appreciated that the frame 20 has a forward portion and a rearward/aft portion. Such fore and aft designations are simply a designation convention based upon the typical direction is which the wheeled implement 12 (e.g., bicycle) moves during operation. Of course, it is to be appreciated that it is possible that the wheeled implement 12 (e.g., bicycle) could be operated in reverse (i.e., to move in a reverse direction). However, such reverse direction operation would normally occur only a minimal amount of time and need not disturb a fore-aft designation convention for the wheeled implement 12 (e.g., bicycle). With the fore-aft designation convention being appreciated, it is to be further appreciated that any line extending between the forward portion and the aft portion may be considered to be along a fore-aft direction. Line 30 is an example fore-aft direction line.

Another portion 32 of the frame 20 extends to meet with a closed end of the yoke (e.g., chainstay) portion 26 of the frame 20. The other portion 32 may be a portion extending from other, more forward portions of the wheeled implement 12 (e.g., bicycle). Within one example, the other portion 32 may be at an end of a down tube that extends from a head tube at which a front fork/handlebars arrangement is located. Within one example, the other portion 32 may be part of a support for a sprocket. It is to be appreciated that the other portion 32 certainly may have a variety of constructions, configuration and/or functions. Such variations are possible, contemplated and within the scope of the present disclosure.

It is to be noted that the location of the other portion 32 of the frame 20 meeting within the closed end of the yoke 26 is generally at/near a lowest point of the frame of the wheeled implement 12 (e.g., bicycle). As such, herein the other portion 32 of the frame 20 is referred to as the lower frame portion 32. Of course, such location need not be the absolute lowest point of the frame 20. It is to be noted that the location of the lower frame portion 32 meeting within the closed end of the yoke 26 is generally at/near a fore/aft midway point of the wheeled implement 12 (e.g., bicycle). Of course, such location need not be the absolute fore-aft middle point of the wheeled implement 12 (e.g., bicycle).

The lower frame portion 32 and the yoke 26 are secured/fastened together. Within an example, the lower frame portion 32 and the yoke 26 are welded together. Of course, it is to be appreciated that such securing/fastening certainly may have a variety of constructions, configuration and/or functions. Such variations are possible, contemplated and within the scope of the present disclosure.

Associated with the securing/fastening of the lower frame portion 32 and the yoke 26 together, a plate portion 36 extends between some of the lower frame portion 32 and some of the yoke 26. The plate portion 36 is secured/fastened in place to both of the lower frame portion 32 and the yoke 26. Within an example, the plate portion 36 is welded to both the lower frame portion 32 and the yoke 26. Of course, it is to be appreciated that such securing/fastening certainly may have a variety of constructions, configuration and/or functions. Such variations are possible, contemplated and within the scope of the present disclosure. The plate portion 36 may add some stability, rigidity, strength, or the like to the securing/fastening of the lower frame portion 32 and the yoke 26. The plate portion 36 may also provide additional function discussed further below.

It is to be noted that various additional portions of the wheeled implement 12 (e.g., bicycle) may be at/near (e.g., in the vicinity) the location of the other portion 32 of the frame 20 meeting within the closed end of the yoke 26. Such additional portions include a possible fender, a possible braking structure, etc. As such, it is to be appreciated that a certain amount of space congestion may be present at the location of the other portion 32 of the frame 20 meeting within the closed end of the yoke 26.

The kickstand device 10 is for attachment to the wheeled implement 12 (e.g., bicycle). Within the shown example, the kickstand device 10 is attached to the frame 20. Specifically in the shown example, the kickstand device 10 is attached at the location of the lower frame portion 32 meeting within the closed end of the yoke 26. The kickstand device 10 includes a mount portion 42 for attachment to the frame 20 of the wheeled implement 12 and a pivotable member 44 pivotally connected to the mount portion. Some or all of the kickstand device 10 may be metal (e.g., steel), but other materials are possible, contemplated and within the scope of the present disclosure.

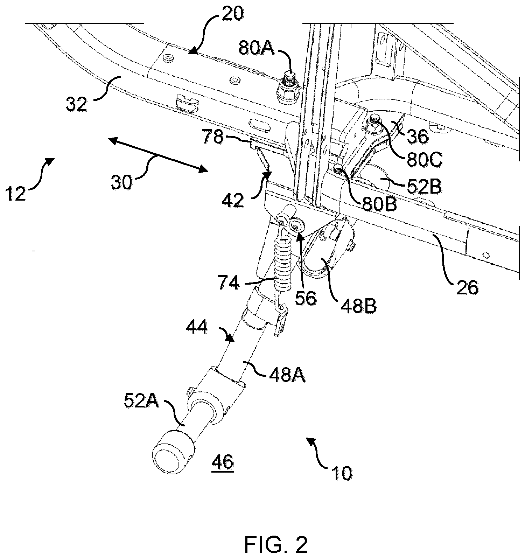

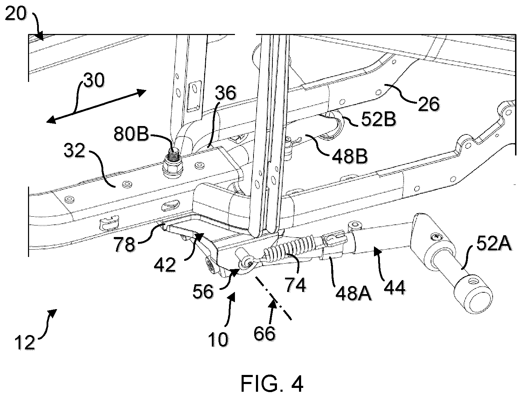

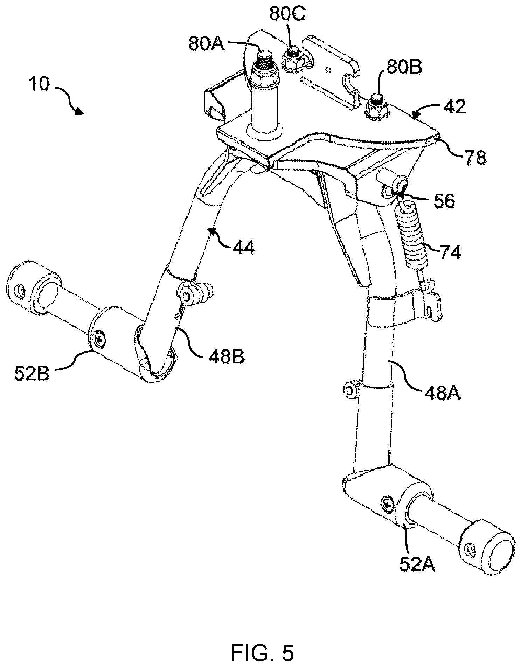

Focusing upon the pivotable member 44, the pivotable member is pivotable between a first position, which is shown in FIGS. 1, 2 and 5-8, and a second position, which is shown in FIGS. 3 and 4. In the first position, the pivotable member 44 is to engage ground 46 (FIGS. 1 and 2) and retain the wheeled implement 12 in an upright orientation when the wheeled implement is stationary. In the second position, the pivotable member 44 is away from ground engagement. The second position may be considered a storage or stowed position. The pivotable member 44 is in the second position during movement operation of the wheeled implement 12.

The pivotable member 44 may have any of a variety of constructions and configurations. Such variations are possible, contemplated and within the scope of the present disclosure. Within the shown example, the pivotable member 44 includes at least one leg 48A for extending to engage the ground 46 when in the first position. Specifically, within the shown example, the pivotable member 44 includes two legs 48A, 48B for extending to engage the ground 46.

The legs 48A, 48B may have any of a variety of constructions and configurations. Within the shown example, each leg 48A, 48B including a respective foot portion 52A, 52B to engage ground when the pivotable member 44 is in the first portion. Also, within the shown example, the legs 48A, 48B join together at a location adjacent to the mount portion 42 so that the pivotable member 44 is a unitary member. Various additional portions/features for the pivotable member 44 may be provided for strength, durability, functionality, appearance, etc. Such various additional portions/features are possible, contemplated and within the scope of the present disclosure.

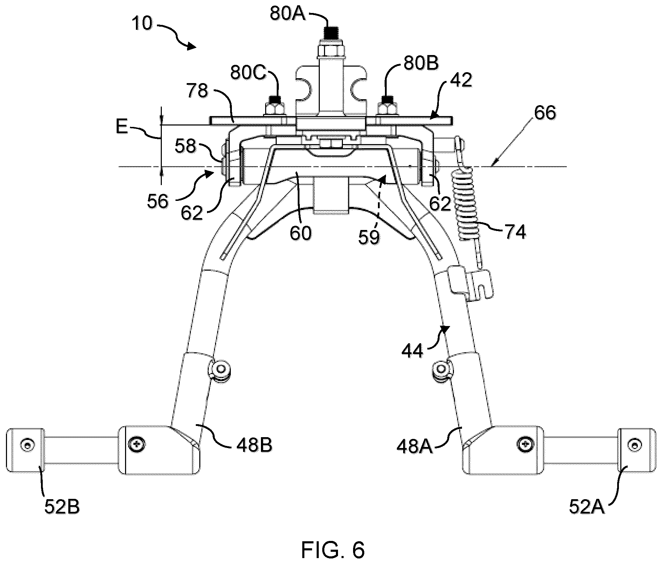

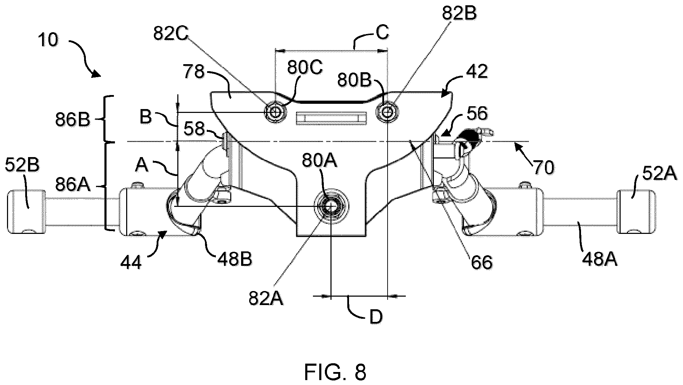

As mentioned, the pivotable member 44 is pivotable relative to the mount portion 42. Such is provided via a pivot connection 56 between the pivotable member 44 and the mount portion 42. The pivot connection 56 may have a variety of constructions and configurations. Such variations of constructions and configurations are possible, contemplated and within the scope of the present disclosure. Within the shown example, the pivot connection 56 includes a pivot pin (or axle) 58 (see FIGS. 6 and 8) that extends through a bore portion 60 (see FIG. 6) of the pivotable member 44 and two bore portions 62 (see FIG. 6) of the mount portion 42. The bore portions 62 of the mount portion 42 straddle the bore portion 60 of the pivotable member 44 and provide for a yoke that bounds the bore portion of the pivotable member, with the pivot pin 58 entrapped therein.

It is to be appreciated that the pivot pin (or axle) 58 and/or the bore portion 60 may have a variety of constructions, configurations, features, additional/associated/ancillary structures, etc. Such varieties are possible, contemplated and within the scope of the present disclosure. As some examples, the pivot pin (or axle) 58 and/or the bore portion 60 has additional/associated/ancillary structures of sliding bushings, bearings and/or similar. Such additional/associated/ancillary structures may help provide for smooth relative rotation, etc. It is to be appreciated and understood that the reference numerals 58 and 60 within the figures additionally identifies all of such possible varieties, including such additional/associated/ancillary structures that may be present. However, for the sake of being exceedingly clear, an additional reference numeral of 59 is provided within the figures (see FIG. 6) to identify all of such possible varieties, including such additional/associated/ancillary structures that is/are, or may be, present. Accordingly, it is to be appreciated that reference numerals 58, 60, and 59 as needed, show structure, e.g., at least one of sliding bushings and bearings, for aiding relative rotation between the pivotable member 44 is pivotable relative to the mount portion 42.

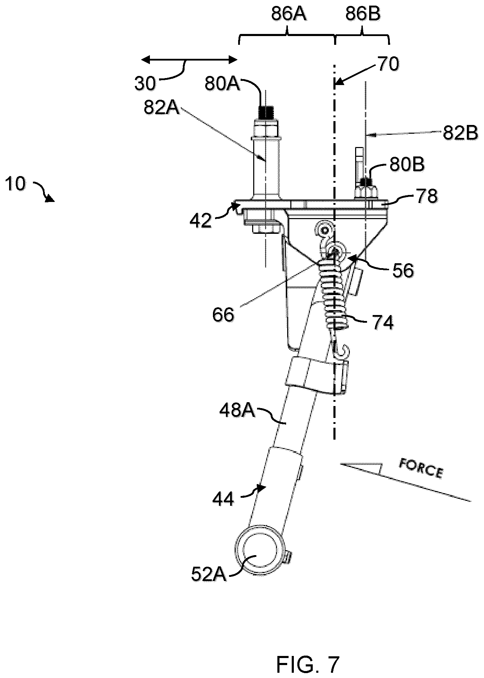

The pivotable member 44 pivots (e.g., rotates) relative to the mount portion 42 about the pivot pin 58. As such, a pivot axis 66 (see FIGS. 3, 4 and 6-8) of the pivotable member 44 is at (e.g., along) the pivot pin 58. It is to be appreciated that the pivot pin 58, and thus the pivot axis 66, is transverse to the fore-aft direction 30 of the wheeled implement 12. Within the shown example, the pivot pin 58, and thus the pivot axis 66, is generally perpendicular to the fore-aft direction 30 of the wheeled implement 12. So, it can be considered that that the pivot axis 66 is in a plane 70 (see FIGS. 7 and 8). It is to be noted that within FIG. 8, since the pivot axis 66 is in the plane 70, both the pivot axis 66 and the plane 70 are being viewed from a top view and thus the pivot axis 66 is coincident with the plane 70 that being viewed from its edge.

The plane 70 extends transverse to the fore-aft direction 30 of the wheeled implement 12 (note that the fore-aft direction 30 is added to FIG. 7 for reference, with the plane 70 being viewed from a side edge). Moreover, within the shown example, the plane 70 containing the pivot axis 66 is generally perpendicular to the fore-aft direction 30 of the wheeled implement 12. For reference, in the example shown in FIG. 6, the plane 70 (not labeled in FIG. 6) containing the axis 66 is the same as the plane of the sheet containing the drawing of FIG. 6. Also for reference, in the example shown in FIGS. 7 and 8, the plane 70 containing the axis 66 is generally perpendicular to the plane of the sheet containing those respective drawings.

A coil tension spring 74 and/or other biasing member also connects the pivotable member 44 to the mount portion 42 (shown fully connected in FIGS. 3 and 4, partially disconnected in FIGS. 1, 2 and 5-8). The spring 74 can help hold the pivotable member 44 in each of the first and second positions. It should be noted that the ends of the spring 74 are located a short distance from the pivot axis 66. Moreover, the spring 74 is elongated (i.e., within tension increased) when the pivotable member 44 is moved between the first and second positions. As such, the spring 74 acts as an over-center spring.

Focusing upon the mount portion 42, the mount portion engages with the frame 20 at the location of the lower frame portion 32 meeting within the closed end of the yoke 26. Within the shown example, the mount portion 42 engages within the plate portion 36 of the frame 20. Also, the mount portion 42 engages within the lower frame portion 32 of the frame 20. The mount portion 42 includes a plate portion 78 that abuts against a lower surface of the lower frame portion 32 and the plate portion 36 of the frame 20.

The mount portion 42 includes a plurality of mount locations (e.g., 80A-80C) for connection of the mount portion 42 to the wheeled implement 12. It is to be appreciated that the mount locations (e.g., 80A-80C) may have a variety of constructions and configuration. Such variations are possible, contemplated and within the scope of the present disclosure. Within the shown example, the mount locations (e.g., 80A-80C) include bolt/nut arrangements. Within the shown example, three mount locations (e.g., 80A-80C), and thus three bolt/nut arrangements, are present. Of course, a different plurality of mount locations is possible, contemplated and within the scope of the present disclosure.

In view of the example mount locations (e.g., 80A-80C) including bolt/nut arrangements, the frame 20 includes locations for receiving such bolt/nut arrangements. Within the shown example, the frame 20 includes holes for receiving the bolts, with the nuts being tightened onto the bolts to hold the bolts, and thus the mount portion 42 relative to the frame 20. It is to be appreciated that the bolt/nut arrangements (e.g., 80A-80C) may include other components/structures such as washers, bushing and the like. Examples of such other components/structures are shown within the figures.

Within the shown example, one (e.g., a first) bolt and nut arrangement (e.g., 80A) is located to engage with the lower frame portion 32 of the frame 20 and two (e.g., a second and a third) bolt and nut arrangements (e.g., 80B and 80C) are located to engage with the plate portion 36 of the frame. Accordingly, the frame has a hole extending through the lower frame portion 32 of the frame 20 to receive the bolt of the first bolt and nut arrangement (e.g., 80A) and the frame has holes extending through the plate portion 36 of the frame for receiving the bolts of the second and third bolt and nut arrangements (e.g., 80B and 80C).

An axis extending along the elongation of the bolt of the first bolt and nut arrangement (e.g., 80A) is designated a first axis 82A. An axis extending along the elongation of the bolt of the second bolt and nut arrangement (e.g., 80B) is designated a second axis 82B. An axis extending along the elongation of the bolt of the third bolt and nut arrangement (e.g., 80C) is designated a third axis 82C.

As can be appreciated from FIGS. 7 and 8, the axes 82A-82C are generally parallel to the plane 70 in which the pivot axis 66 is located. Moreover, the axes 82A-82C are located away from the plane 70 in which the pivot axis 66 is located. Specifically, the axes 82A-82C are spaced along the fore-aft direction 30, away from the plane 70. As such, the axes 82A-82C, and thus the mount locations (e.g., bolt and nut arrangements, 80A-80C) are spaced along the fore-aft direction 30, away from the pivot location of the pivotable member 44.

It is to be noted that some (e.g., a portion or segment) of the mount portion 42 (e.g., 86A) is located forward, along the fore-aft direction 30, of the plane 70 in which the pivot axis 66 is located. Some (e.g., the first, 80A) of the mount locations are located at the forward segment 86A of the mount portion 42. In the shown example, the first mount location 80A is located at the forward segment 86A. It is to be noted that some (e.g., a portion or segment) of the mount portion 42 (e.g., 86B) is located rearward, along the fore-aft direction 30, of the plane 70 in which the pivot axis 66 is located. See FIGS. 7 and 8. Some (e.g., the second and third, 80B and 80C) of the mount locations are located at the aft (e.g., rearward) segment 86B of the mount portion 42. In the shown example, the second and third mount locations 80B and 80C are located at the aft (e.g., rearward) segment 86B.

Accordingly, it is to be noted that some (e.g., the first, 80A) of the mount locations are located forward, along the fore-aft direction 30, of the plane 70 in which the pivot axis 66 is located. So, within the shown example, the first mount location/bolt and nut arrangement 80A is located forward of the plane 70 in which the pivot axis 66 is located. It is to be noted that some (e.g., the second and third, 80B and 80C) of the mount locations are located rearward, along the fore-aft direction 30, of the plane 70 in which the pivot axis 66 is located. So, within the shown example, the second and third mount locations/bolt and nut arrangements 80B and 80C are located rearward of the plane 70 in which the pivot axis 66 is located.

It is to be noted that the fore and aft (e.g., forward and rearward) segments 86A and 86B are identified generally via brackets in the FIGS. 7 and 8. It is to be appreciated that the use of brackets is to be taken as a guideline and that variations of the demarcations of forward and rearward may be varied.

It is to be noted that force is imparted to the pivotable member 44 as the pivotable member proceeds toward the first position (see FIG. 7 for an example force/force direction shown therein). Such force includes force caused from the weight of the wheeled implement 12 and/or momentum of the wheeled implement 12 during movement of the pivotable member 44 toward the first position. It is to be appreciated that operation of the kickstand device 10 may include some elevation of a rearward portion (e.g., a rearward wheel 22) of the wheeled implement 12 up away from ground 46 during movement of the pivotable member 44 toward the first position. It is to be appreciated that the kickstand device 10 may hold a rearward portion (e.g., a rearward wheel 22) of the wheeled implement 12 up at some elevation away from ground 46 while the pivotable member 44 toward the first position. Such may be considered a parked condition. There may be force imparted when in the parked condition.

The force imparted to the pivotable member 44 translates to rotational torque force being transmitted to the mount portion 42. The rotational torque at the mount portion 42 is a rotational force generally at the pivot axis 66. In FIG. 7, the rotational torque is clockwise generally about the pivot axis 66. Accordingly, an aft or rearward segment of the mount portion 42 tends to receive a downward (as viewed in FIG. 7) force and a fore or forward segment of the mount portion 42 tends to receive an upward (as viewed in FIG. 7) force. In general, the aft segment of the mount portion 42 is rearward of the plane 70 (e.g., right of the plane 70 as viewed in FIG. 7) and the fore segment of the mount portion 42 is forward of the plane 70 (e.g., left of the plane 70 as viewed in FIG. 7). It is to be appreciated that the downward (as viewed in FIG. 7) force upon the aft segment of the mount portion 42 may try to distend (e.g., bend) the aft segment of the mount portion 42 away from the frame 20. To be clear, the downward force is a force that may try to bend the mount portion 42.

However, in accordance with at least an aspect of the present disclosure, the plane 70 containing the pivot axis 66, and thus the pivot connection 56, is located between at least some of the mount locations along the fore-aft direction 30. With the shown example, the plane 70 containing the pivot axis 66, and thus the pivot connection 56, is located between the first mount location 80A and the second and third mount locations 80B and 80C. Within the shown example and a specific example description, the plane 70 containing the pivot axis 66, and thus the pivot connection 56, is located between the first mount location 80A and the second mount location 80B. Within the shown example and a specific example description, the plane 70 containing the pivot axis 66, and thus the pivot connection 56, is located between the first mount location 80A and the third mount location 80C. Another way of considering the topic is that the fore and aft segments 86A and 86B of the mount portion 42 are located on opposed sides of the pivotal connection 66 of the pivot member to the mount portion. Each of the fore and aft segments 86A, 86B has at least one respective mount location 82A-82C for connection to the wheeled implement 12.

It is to be recalled that the pivotable member 44 is capable of transferring a force (e.g., a torque force) to the mount portion 42. Such transfer of force may be associated with the pivotable member 44 proceeding toward the first position (see FIGS. 1, 2 and 5-8) and being engaged with the ground 46. Also recall that the mount portion 42 has fore and aft segments 86A, 86B, with respective mount locations 80A and 80B/80C, that are located on opposed sides of the pivotal connection of the pivot member to the mount portion. Such positioning of mount locations 80A and 80B/80C helps to prevent bending of the mount portion 42.

It is to be appreciated that spacings of the mount locations 80A-80C from the plane 70 in the fore-aft direction may be varied and that such variation is possible, contemplated and within the scope of the present disclosure. With the shown example, the first mount location 80A is at a distance A (see FIG. 8), as measured to the axis 82A, from the plane 70 in the fore-aft direction. Within a specific example, the distance A is 47mm, but again a different distance is possible, contemplated and within the scope of the present disclosure. With the shown example, the second and third mount locations 80B and 80C are both at a distance B (see FIG. 8), as measured to the axes 82B and 82C, from the plane 70 in the fore-aft direction. Within a specific example, the distance B is 21 mm, but again a different distance is possible, contemplated and within the scope of the present disclosure. It is also to be noted that the second and third mount locations 80B and 80C need not be at the same distance B (i.e., they may be at different, respective distances). Here also, such example(s) of mount location(s) (e.g., 80A-80C) may help to prevent bending of the mount portion.

So, in accordance with at least one aspect of the present disclosure, with at least some of the plurality of mount locations being spaced from each other in a fore-aft direction of the wheeled implement, and the pivotable member being pivotally connected to the mount portion at a location such that a pivot axis about which the pivotable member pivots is in a plane that is located intermediate of the at least some of the plurality of mount locations in the fore-aft direction of the wheeled implement, such may help prevent bending of the mount portion 42.

It is to be appreciated that spacings of the second and third mount locations 80B and 80C from each other in the lateral (e.g., left and right as viewed in FIG. 8) direction may be varied and that such variation is possible, contemplated and within the scope of the present disclosure. With the shown example, the second mount location 80B is at a distance C (see FIG. 8) from the third mount location 80C, as measured between the axes 82B and 82C in the lateral direction. Within a specific example, the distance C is 80mm, but again a different distance is possible, contemplated and within the scope of the present disclosure. Similarly, it is to be appreciated that the spacings of the second and third mount locations 80B and 80C from the first mount location 80A in the lateral (e.g., left and right as viewed in FIG. 8) direction may be varied and that such variation is possible, contemplated and within the scope of the present disclosure. With the shown example, the second mount location 80B is at a distance D (see FIG. 8) from the first mount location 80A, as measured between the axes 82A and 82B in the lateral direction. Within a specific example, the distance D is 40mm, but again a different distance is possible, contemplated and within the scope of the present disclosure.

It is to be appreciated that the pivot pin 58, and specifically the pivot axis 66, is located below the plate portion 78 of the mount portion 42. Within an example, the pivot axis 66, is located at a distance E (see FIG. 6) below a bottom surface of the plate portion 78. Within a specific example, the distance E is 29.5mm. But, it is to be noted that variation (e.g., distance variation) is possible, contemplated and within the scope of the present disclosure. Distance between the plate portion and the pivot axis 66 may be a factor in the force that may try to bend the mount portion 42. Thus, in accordance with at least one aspect of the present invention, the mount locations 80A and 80B/80C help to prevent bending of the mount portion 42.

In accordance with at least one aspect of the present disclosure, at least some of the plurality of mount locations includes at least one mount location forward of the plane in which the pivotable member pivots and at least one mount location rearward of the plane in which the pivotable member pivots. In accordance with at least one aspect of the present disclosure, the at least one mount location rearward of the plane in which the pivotable member pivots includes two mount locations. In accordance with at least one aspect of the present disclosure, at least one of the plurality of mount locations includes a mount hole for receiving a fastener. In accordance with at least one aspect of the present disclosure, the fastener includes a bolt. In accordance with at least one aspect of the present disclosure, each of the plurality of mount locations includes a mount hole for receiving a fastener. In accordance with at least one aspect of the present disclosure, each fastener is a bolt.

In accordance with at least one aspect of the present disclosure, the pivotable member includes at least one leg, with the leg including a foot portion to engage ground when the pivotable member is in the first portion. In accordance with at least one aspect of the present disclosure, the pivotable member includes two legs, with each leg including a respective foot portion to engage ground when the pivotable member is in the first portion. In accordance with at least one aspect of the present disclosure, the mount portion is configured to attach to a frame of the wheeled implement. In accordance with at least one aspect of the present disclosure, the mount portion includes at least an additional portion configured to interact within the frame of the wheeled implement. In accordance with at least one aspect of the present disclosure, the additional portion of the mount portion includes a plate segment.

Recall that the pivotable member may transfer a torque to the mount portion associated with the pivotable member proceeding toward the first position and being engaged with the ground. Also, recall that the mount portion has fore and aft segments that are located on opposed sides of the pivotal connection of the pivot member to the mount portion, and each of the fore and aft segments has at least one respective mount location for connection to the wheeled implement.

So, in accordance with at least one aspect of the present disclosure, at least one mount location is forward of a plane in which the pivotable member pivots and at least one mount location is rearward of the plane in which the pivotable member pivots.

In accordance with at least one aspect of the present disclosure, the at least one mount location rearward of the plane in which the pivotable member pivots includes two mount locations. In accordance with at least one aspect of the present disclosure, at least some of the mount locations includes a mount hole for receiving a fastener. In accordance with at least one aspect of the present disclosure, the fastener includes a bolt. In accordance with at least one aspect of the present disclosure, each of the mount locations includes a mount hole for receiving a fastener. In accordance with at least one aspect of the present disclosure, each fastener is a bolt.

It is to be appreciated that the broad interpretations and options are within the scope of the present disclosure.

As mentioned, it is contemplated that examples presented within the present disclosure are non-limiting. The details are such non-limiting examples and are provided only to illustrate just one, of many, options to provide the device. Again, many options for providing the device are contemplated and are within the scope of the present disclosure.

It is to be appreciated and understood that all of the discussed examples within the scope of the present disclosures are usable alone or in combinations. Moreover, all of the examples within the scope of the present disclosure are usable within various use environments. Accordingly, such variations, options, etc. are within the scope of the present disclosure. All of the terms, phrases, etc. are to be broadly interpreted.

It is to be appreciated that various examples and/or aspects are provided by the present disclosure. Some of such are presented above. Other examples are contemplated and are with the scope of the present disclosure.

Although the subject matter has been described in language specific to structural features or methodological acts, it is to be understood that the subject matter defined in the appended claims is not necessarily limited to the specific features or acts described above. Rather, the specific features and acts described above are disclosed as example forms of implementing at least some of the claims.

Various operations of embodiments are provided herein. The order in which some or all of the operations described should not be construed to imply that these operations are necessarily order dependent. Alternative ordering will be appreciated having the benefit of this description. Further, it will be understood that not all operations are necessarily present in each embodiment provided herein. Also, it will be understood that not all operations are necessary in some embodiments.

Many modifications may be made to the instant disclosure without departing from the scope or spirit of the claimed subject matter. Unless specified otherwise, "first," "second," or the like are not intended to imply a temporal aspect, a spatial aspect, an ordering, etc. Rather, such terms are merely used as identifiers, names, etc. for features, elements, items, etc. For example, a first location and a second location correspond to location A and location B or two different or two identical locations or the same location.

Moreover, "exemplary" and/or the like is used herein to mean serving as an example, instance, illustration, etc., and not necessarily as advantageous. As used in this application, "or" is intended to mean an inclusive "or" rather than an exclusive "or". In addition, "a" and "an" as used in this application are to be construed to mean "one or more" unless specified otherwise or clear from context to be directed to a singular form. Also, at least one of A and B or the like means A or B or both A and B. Furthermore, to the extent that "includes", "having", "has", "with", or variants thereof are used in either the detailed description or the claims, such terms are intended to be inclusive in a manner similar to "comprising".

Also, although the disclosure has been illustrated and described with respect to one or more implementations, equivalent alterations and modifications will occur to others skilled in the art based upon a reading and understanding of this specification and the annexed drawings. The disclosure includes all such modifications and alterations and is limited only by the scope of the following claims. In particular regard to the various functions performed by the above-described components (e.g., elements, resources, etc.), the terms used to describe such components are intended to correspond, unless otherwise indicated, to any component which performs the specified function of the described component (e.g., that is functionally equivalent), even though not structurally equivalent to the disclosed structure. In addition, while a particular feature of the disclosure may have been disclosed with respect to only one of several implementations, such feature may be combined with one or more other features of the other implementations as may be desired and advantageous for any given or particular application.

## Claims

1. A kickstand device (10) comprising:
a mount portion (42) for attachment to a wheeled implement (12); and
a pivotable member (44) pivotally connected to the mount portion (42), the pivotable member (44) being pivotable between a first position to engage ground (46) and retain the wheeled implement (12) in an upright orientation and a second position away from ground engagement;
wherein the mount portion (42) comprises a first mount location (80A) for connection to the wheeled implement (12) and a second mount location (80B) for connection to the wheeled implement (12), with the first mount location (80A) being in a fore direction of the wheeled implement (12) and the second mount location (80B) being in an aft direction of the wheeled implement (12), and the pivotable member (44) being pivotally connected to the mount portion (42) such that a pivot axis (66) about which the pivotable member (44) pivots between the first position and the second position is in a plane (70) and the first mount location (80A) is to a first side of the plane (70) and the second mount location (80B) is to a second side of the plane (70).

2. The device (10) as set forth in claim 1, wherein the mount portion (42) comprises a third mount location (80C) in the aft direction of the wheeled implement (12) and to the second side of the plane (70).

3. The device (10) as set forth in any of the proceeding claims, wherein the mount portion (42) comprises a fourth mount location in the fore direction of the wheeled implement (12) and to the first side of the plane (70).

4. The device (10) as set forth in any of the proceeding claims, wherein the mount portion (42) comprises a third mount location in the fore direction of the wheeled implement (12) and to the first side of the plane (70).

5. The device (10) as set forth in any of the proceeding claims, wherein the mount portion (42) comprises a fourth mount location in the aft direction of the wheeled implement (12) and to the second side of the plane (70).

6. The device (10) as set forth in any of the proceeding claims, including at least one of sliding bushings and bearings (58-60) for aiding relative rotation between the pivotable member (44) and the mount portion (42).

7. The device (10) as set forth in any of the proceeding claims, wherein the pivotable member (44) comprises a leg (48A), with the leg (48A) comprising a foot portion (52A) to engage ground (46) when the pivotable member (44) is in the first position.

8. The device (10) as set forth in any of the proceeding claims, wherein the pivotable member (44) comprises a second leg (48B), with the second leg (48B) comprising a second foot (52B) portion to engage ground (46) when the pivotable member (44) is in the first position.

9. The device (10) as set forth in any of the proceeding claims, wherein the second leg (48B) is diametrically opposite the first leg (48A) relative to the mount portion (42).

10. The device (10) as set forth in any of the proceeding claims, comprising a biasing member (74) to facilitate movement of the leg (48A) between the first position and the second position.

11. The device (10) as set forth in any of the proceeding claims, wherein the mount portion (42) is configured to attach to a frame (20) of the wheeled implement (12).

12. The device (10) as set forth in any of the proceeding claims, wherein the mount portion (42) comprises an additional portion (78) configured to interact within the frame (20) of the wheeled implement (12).

13. The device (10) as set forth in any of the proceeding claims, wherein the additional portion (78) of the mount portion (42) includes a plate portion (78).

14. The device (10) as set forth in any of the proceeding claims, wherein the pivotable member (44) transfers a torque to the mount portion (42) when pivoting about the pivot axis (66) from the second position to the first position.

15. A wheeled implement (12) comprising:
a frame (20);
a plurality of wheels (22) rotatably connected to the frame (20); and
the kickstand device (10) as set forth in any of the proceeding claims.
